# EUROPÄISCHE PATENTSCHRIFT

(11) **EP 2 233 321 B1**
(45) Veröffentlichungstag und Bekanntmachung des Hinweises auf die Patenterteilung: **26.10.2011**
(21) Anmeldenummer: 09175623.9
(22) Anmeldetag: 11.11.2009
(51) Int. Cl.: B60C 11/04, B60C 11/12, B60C 11/13

(54) **Laufstreifenprofil eines Fahrzeugluftreifens**
Run strip profile of a vehicle tyre
Profil de bande de roulement d'une bande pneumatique de véhicule

(30) Priorität: 27.03.2009 DE 102009003687
(43) Veröffentlichungstag der Anmeldung: 29.09.2010
(73) Patentinhaber: Continental Reifen Deutschland GmbH, 30165 Hannover (DE)
(72) Erfinder: Pfaff, Daniel, 30938, Burgwedel (DE); Metge, Axel, 30179, Hannover (DE)
(74) Vertreter: Finger, Karsten

(56) Entgegenhaltungen:
- EP-A1- 2 028 025
- EP-A2- 0 887 209

## Beschreibung

Die Erfindung betrifft ein Laufstreifenprofil eines Fahrzeugluftreifens - insbesondere eines Van- oder Kleintransporterreifens - mit zwei in axialer Richtung A des Fahrzeugluftreifens ausgebildeten äußeren Schulterbandbereichen und einem axial dazwischen angeordneten Mittenbandbereich, die jeweils in axialer Richtung durch eine über den Umfangs des Fahrzeugluftreifens erstreckte in Umfangsrichtung ausgerichtete erste Umfangsrille von einander beabstandet sind, wobei die Profilbänder jeweils Profilblockreihen aufweisen, die aus in Umfangsrichtung U des Fahrzeugluftreifens hintereinander angeordneten und durch Querrillen von einander beabstandeten radial erhabenen Profilblockelementen ausgebildet sind, wobei die Querrillen und die Umfangsrillen jeweils nach radial innen durch einen in Haupterstreckungsrichtung der jeweiligen Umfangs- bzw. Querrille erstreckten Rillengrund begrenzt ausgebildet sind. Ein solches gattungsgemäßes Lanfstreifenprofil ist aus der EP- A2-0887209 bekannt.

Van- und Kleintransporterreifen sollen zum einen hohe Lasten aufnehmen, und zum anderen hinsichtlich der Geschwindigkeiten und Fahreigenschaften sich ähnlich wie Pkw-Reifen verhalten. Van- und Kleintransporterreifen sind - soweit hohe Lasten aufgenommen werden sollen - häufig mit Umfangsrippen im Schulterbereich des Reifens ausgebildet, die eine hohe Umfangssteifigkeit zur Aufnahme der Last gewährleisten. Derartige Ausbildungen haben den Nachteil, dass sie gerade im Schulterbereich keine Griffkanten aufweisen. Hierdurch werden die Griffeigenschaften auf Nässe und Schnee ungewünscht negativ beeinflusst.

Daher ist es bekannt bei derartigen Fahrzeugluftreifen für Van- und Kleintransporter wie bei Pkw-Reifen üblich in den Reifenschultern jeweils ebenfalls eine Blockprofilreihe auszubilden, die von den im Kronenbereich angeordneten Blockprofilreihen durch eine Umfangsrille getrennt angeordnet sind. Die im Blockprofil ausgebildeten Querrillen bilden ein Aufnahmevolumen zur Aufnahme von Schnee. Die Profilblockelemente der Profilblockreihe ermöglichen durch ihre Profilblockkanten zusätzliche Griffkanten. Beides bewirkt einen verbesserten Schneegriff. Es ist bekannt, den Schneegriff weiter dadurch zu verbessern, dass in den Profilblockelementen der Profilblockreihe zusätzliche Feineinschnitte ausgebildet sind.

Die Ausbildung derartiger Reifen mit Profilblockreihen in der Reifenschulter bewirkt eine deutlich reduzierte Umfangssteifigkeit des Reifens in der Reifenschulter, wodurch bei den für Van- oder Kleintransporterreifen gewünschten zunehmend hohen Lasten der Reifenschulterbereich beim Durchlaufen des Reifenlatsches einer starken Durchbiegung um eine Achsparallele des Reifens unterliegen und somit die Handlingeigenschaften des Reifens auf trockener Fahrbahn reduziert werden. Da die Ausbildung von Feineinschnitten in Profilblockelementen der Schulter die Profilblockelemente und die Profilblockreihe zusätzlich noch biegeweicher gestaltet, werden hierdurch die Handlingeigenschaften des Reifens auf trockener Fahrbahn weiter zusätzlich reduziert. Um diese zusätzliche Reduktion gering zu halten, ist die Zahl der in den Profilblockelementen ausgebildeten Feineinschnitte und somit die hierdurch bedingten Wintereigenschaften zusätzlich beschränkt.

Der Erfindung liegt daher die Aufgabe zu Grunde bei einem Laufstreifenprofil eines Fahrzeugluftreifens - insbesondere eines Van- oder Kleintransporterreifens - mit zwei in axialer Richtung A des Fahrzeugluftreifens ausgebildeten äußeren Schulterbandbereichen und einem axial dazwischen angeordneten Mittenbandbereich, die jeweils in axialer Richtung durch eine über den Umfangs des Fahrzeugluftreifens erstreckte in Umfangsrichtung ausgerichtete erste Umfangsrille von einander beabstandet sind, wobei die Profilbänder jeweils Profilblockreihen aufweisen, die aus in Umfangsrichtung U des Fahrzeugluftreifens hintereinander angeordneten und durch Querrillen von einander beabstandeten radial erhabenen Profilblockelementen ausgebildet sind, wobei die Querrillen und die Umfangsrillen jeweils nach radial innen durch einen in Haupterstreckungsrichtung der jeweiligen Umfangs- bzw. Querrille erstreckten Rillengrund begrenzt ausgebildet sind, mit einfachen Mitteln verbesserte Wintergriff- und Trockenhandlingeigenschaften zu ermöglichen.

Die Aufgabe wird erfindungsgemäß durch die Ausbildung eines Laufstreifenprofils eines Fahrzeugluftreifens - insbesondere eines Van- oder Kleintransporterreifens - mit zwei in axialer Richtung A des Fahrzeugluftreifens ausgebildeten äußeren Schulterbandbereichen und einem axial dazwischen angeordneten Mittenbandbereich, die jeweils in axialer Richtung durch eine über den Umfangs des Fahrzeugluftreifens erstreckte in Umfangsrichtung ausgerichtete erste Umfangsrille von einander beabstandet sind, wobei die Profilbänder jeweils Profilblockreihen aufweisen, die aus in Umfangsrichtung U des Fahrzeugluftreifens hintereinander angeordneten und durch Querrillen von einander beabstandeten radial erhabenen Profilblockelementen ausgebildet sind, wobei die Querrillen und die Umfangsrillen jeweils nach radial innen durch einen in Haupterstreckungsrichtung der jeweiligen Umfangs- bzw. Querrille erstreckten Rillengrund begrenzt ausgebildet sind, gemäß den Merkmalen von Anspruch 1 gelöst, bei dem wenigstens einer der beiden - insbesondere beide - Schulterbandbereiche ausgehend von der ersten Umfangsrille aus einer ersten, von der ersten Umfangsrille axial begrenzten Profilblockreihe und aus einer zweiten axial neben der ersten Profilblockreihe angeordneten, in Umfangsrichtung U zur erstem versetzten und in axialer Richtung durch eine zweite Umfangsrille von der ersten beabstandeten Profilblockreihe ausgebildet ist, die sich axial bis außerhalb der Bodenaufstandsbreite T_{A} erstreckt, wobei die zweite Umfangsrille längs ihrer Erstreckung in Umfangsrichtung mit einem zickzack-förmigen Verlauf mit in Umfangsrichtung alternierend angeordneten axial äußeren von der ersten Umfangsrille weg weisenden und axial inneren zur ersten Umfangsrille hin weisenden Knickstellen ausgebildet ist, bei der in jeder axial äußeren Knickstelle eine Querrille der ersten Profilblockreihe mündet, die sich in axialer Richtung A von der ersten zur zweiten Umfangsrille erstreckt, und bei der in jeder axial inneren Knickstelle eine Querrille der zweiten Profilblockreihe mündet, die sich in axialer Richtung A von der zweiten Umfangsrille bis in eine Position außerhalb der Bodenaufstandsbreite T_{A} erstreckt, wobei die zweite Umfangsrille mit einer Rillentiefe T_{z} ausgebildet ist, wobei die Querrillen der ersten Profilblockreihe längs ihrer axialen Erstreckung ausgehend von der Rillentiefe T_{Z} in der Einmündung in die zweite Umfangsrille jeweils in einem ersten Erstreckungsbereich mit bis zu einem Maximalwert T_{R1} kontinuierlich zunehmender Rillentiefe und in einem sich dem ersten Erstreckungsbereich anschließenden zweiten Erstreckungsbereich, der sich bis zur Einmündung in die erste Umfangsrille erstreckt, mit der Rillentiefe T_{R1} ausgebildet ist, und wobei die Querrillen der zweiten Profilblockreihe längs ihrer axialen Erstreckung ausgehend von der Rillentiefe T_{z} in der Einmündung in die zweite Umfangsrille jeweils in einem ersten Erstreckungsbereich mit bis zu einem Maximalwert T_{R2} kontinuierlich zunehmender Rillentiefe und in einem anschließenden zweiten Erstreckungsbereich innerhalb der Bodenaufstandsbreite T_{A} mit der Rillentiefe T_{R2} ausgebildet ist.

Die Ausbildung mit zickzackförmiger Umfangsrille, bei der die Querrillen der ersten Profilblockreihe in die am weitesten axial außen liegende Knickstelle und die Querrillen der zweiten Profilblockreihe in die am weitesten axial innen liegende Knickstelle der Umfangsrille einmünden, bewirkt aufgrund der versetzten Anordnung der einmündenden Querrillen und der sich axial überlappenden Einmündungsbereiche eine regelrechte Verzahnung der in Umfangsrichtung versetzt zueinander angeordneten Profilblockelemente der beiden Profilblockreihen. Die Verzahnung und die beidseitig der Umfangsrille ausgebildete rampenförmige Anhebung des Rillengrundes aus den Querrillen heraus bis zur zickzackförmigen Umfangsrille bewirken eine sehr hohe Umfangsversteifung des Laufstreifenprofils im Bereich der Reifenschulter, wodurch sehr hohe Lasten sicher unter Vermeidung unerwünscht starker Durchbiegungen aufgenommen werden können. Hierdurch werden auch bei den für Van- und Transporterreifen gewünschten hohen Aufnahmelasten und den für diese Reifen gewünschten hohen Geschwindigkeiten gute Trockenhandlingeigenschaften ermöglicht. Die Zickzackförmige Umfangsrille sowie die Querrillen bewirken eine erhöhte Anzahl an Griffkanten und eine erhöhte wirkende Griffkantenlänge, wobei durch die Einmündung der Querrillen der ersten Profilblockreihe in der axial äußeren Knickstelle und die Einmündung der Querrillen der zweiten Profilblockreihe in die axial inneren Knickstellen eine zusätzliche Länge der wirkenden Griffkanten und zusätzliches Aufnahmevolumen zur Aufnahme von Schnee bereitgestellt wird. Das durch die zickzackförmig ausgebildete Umfangsrille und die Querrillen bedingte zusätzliche Aufnahmevolumen bewirken eine weiter verbesserte Schnee-Schneereibung. Die hohe Umfangssteifigkeit des Laufstreifenprofils in der Reifenschulter ermöglicht darüber hinaus - soweit erforderlich - trotz hoher Umfangssteifigkeit die Ausbildung einer erhöhten Anzahl von Feineinschnitten in den Proflblockelementen, wodurch die Schneegriffeigenschaften weiter verbessert werden können.

Besonders vorteilhaft ist die Ausbildung eines Laufstreifenprofils gemäß den Merkmalen von Anspruch 2, wobei die zweite Umfangsrille schmaler ausgebildet ist als die erste Umfangsrille. Hierdurch kann unter Nutzung der Vorteile Zickzackrille eine hohe Quersteifigkeit der Reifenschulter ermöglicht werden.

Besonders vorteilhaft ist die Ausbildung eines Laufstreifenprofils gemäß den Merkmalen von Anspruch 3, mit einer axialen Erstreckungsbreite Bₛ des Schulterbandbereichs im Erstreckungsbereich der Bodenaufstandsbreite T_{A} gemessen ausgehend von der ersten Umfangsrille und mit einer in axialer Richtung A des Fahrzeugluftreifens gemessene maximale axiale Erstreckungsbreite s des Rillenverlaufs der zweiten Umfangsrille mit (0,15Bs )≤s ≤ (0,4B_{S}). Hierdurch kann eine hohe Umfangssteifigkeit ermöglicht und die Gefahr von unregelmäßigem Abrieb minimiert werden.

Besonders vorteilhaft ist die Ausbildung eines Laufstreifenprofils gemäß den Merkmalen von Anspruch 4, wobei der zweite Erstreckungsbereich der Querrillen der ersten Profilblockreihe eine in axialer Richtung A des Fahrzeugluftreifens gemessene Erstreckungsbreite b_{R1} aufweist mit (0,15B_{S} )≤ b_{R1} ≤ (0,4B_{S}), insbesondere mit b_{R1} = (0,4B_{S}). Hierdurch werden in einfacher zuverlässiger Weise im Mittenbereich und somit im gesamten Schulterbereich ausreichend wirksame Querrillen bei voller Profiltiefe trotz hoher Versteifung ermöglicht.

Besonders vorteilhaft ist die Ausbildung eines Laufstreifenprofils gemäß den Merkmalen von Anspruch 5, wobei der zweite Erstreckungsbereich der Querrillen der zweiten Profilblockreihe eine in axialer Richtung A des Fahrzeugluftreifens gemessene Erstreckungsbreite b_{R2} aufweist mit (0,15BS )≤ b_{R2} ≤ (0,4B_{S}). Hierdurch werden in einfacher zuverlässiger Weise im Mittenbereich und somit im gesamten Schulterbereich ausreichend wirksame Querrillen bei voller Profiltiefe trotz hoher Versteifung ermöglicht.

Besonders vorteilhaft ist die Ausbildung eines Laufstreifenprofils gemäß den Merkmalen von Anspruch 6, wobei die Rillentiefen T_{R1} und T_{Z} am Neureifen mit (0,3 T_{R1} )≤ T_{Z} ≤ (0,6 T_{R1}) ausgebildet sind. Hierdurch kann in einfacher Weise ausreichend Rillentiefe für Schneetraktion und Handling bereit gestellt werden ohne die Quersteifigkeit unerwünscht zu reduzieren.

Besonders vorteilhaft ist die Ausbildung eines Laufstreifenprofils gemäß den Merkmalen von Anspruch 7, wobei die Rillentiefen T_{R2} und T_{Z} am Neureifen mit (0,3 T_{R2} )≤ T_{Z} <(0,6T_{R2}) ausgebildet sind. Hierdurch kann in einfacher Weise ausreichend Rillentiefe für Schneetraktion und Handling bereit gestellt werden ohne die Quersteifigkeit unerwünscht zu reduzieren.

Besonders vorteilhaft ist die Ausbildung eines Laufstreifenprofils gemäß den Merkmalen von Anspruch 8, wobei die Rillentiefen T_{R1} und T_{R2} mit T_{R1} = T_{R2} ausgebildet sind. Hierdurch werden Schneetraktion und Aquaplaningeigenschaften zusätzlich begünstigt.

Besonders vorteilhaft ist die Ausbildung eines Laufstreifenprofils gemäß den Merkmalen von Anspruch 9, wobei der erste Erstreckungsbereich der Querrillen der ersten Profilblockreihe eine in axialer Richtung A des Fahrzeugluftreifens gemessene Erstreckungsbreite a und der erste Erstreckungsbereich der Querrillen der zweiten Profilblockreihe eine in axialer Richtung A des Fahrzeugluftreifens gemessene Erstreckungsbreite b aufweist mit a ≥ b, wobei insbesondere (1,3b) ≤ a ≤ (2b).

Die Erfindung wird im Folgenden an Hand der in den Figuren 1 bis 8 dargestellten Ausführungsbeispiele näher erläutert. Darin zeigen
- Fig. 1: Umfangsabschnitt eines Laufstreifenprofils für Van- oder Transporterreifen in Draufsicht,
- Fig. 2: Ausschnitt des Laufstreifenprofils von Fig. 2 in vergrößerter Form,
- Fig. 3: Schnittdarstellung durch die zickzackförmige Umfangsrille gemäß Schnitt III-III von Fig. 2,
- Fig. 4: Schnittdarstellung durch eine Querrille der ersten Profilblockreihe gemäß Schnitt IV-IV von Fig. 2,
- Fig. 5: Schnittdarstellung durch die Querrille der ersten Profilblockreihe gemäß Schnitt V-V von Fig. 2 zur Erläuterung der rampenförmigen Erhebung,
- Fig. 6: Schnittdarstellung einer Querrille der zweiten Profilblockreihe gemäß Schnitt VI-VI von Fig. 2,
- Fig. 7: Schnittdarstellung der Querrille der zweiten Profilblockreihe gemäß Schnitt VII-VII von Fig. 2 in einer Position außerhalb der Bodenaufstandsfläche und
- Fig. 8: Schnitt durch die Querrille der zweiten Profilblockreihe gemäß Schnitt VIII-VIII von Fig. 2 zur Erläuterung der rampenförmigen Erhebung.

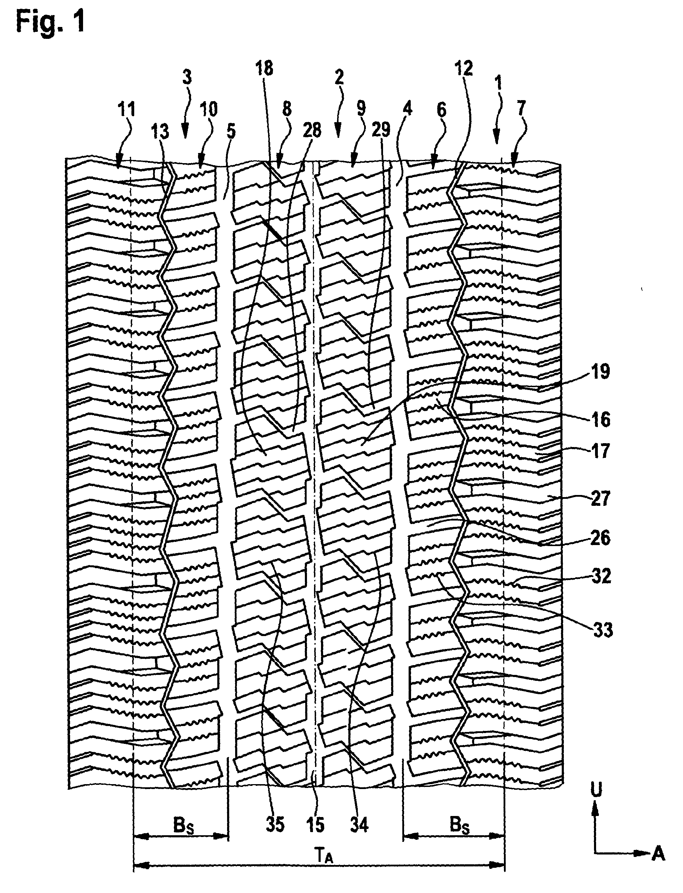

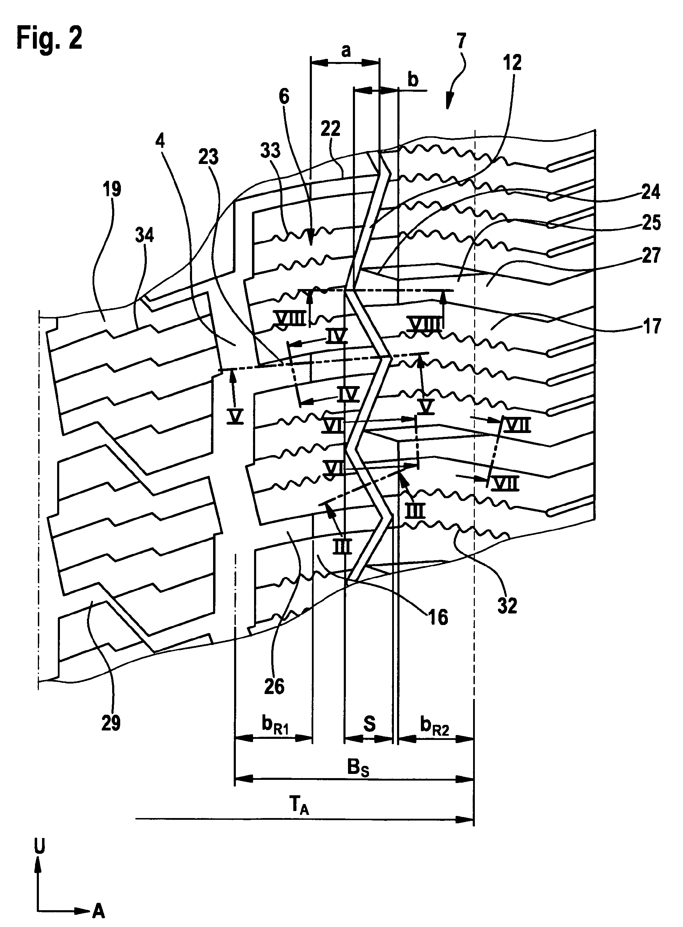

Die Figuren 1 und 2 zeigen einen Umfangsabschnitt eines Laufstreifenprofils eines Fahrzeugluftreifens für Van- oder Transporterfahrzeuge. In den Figuren ist mit U die Umfangsrichtung und mit A die axiale Richtung des Fahrzeugluftreifens eingezeichnet. Das Laufstreifenprofil ist mit einem in Fig. 1 auf der linken Seite dargestellten Schulterband 3, einem auf der rechten Seite dargestellten Schulterband 1 und einem in axialer Richtung A zwischen den beiden Schulterbändern 1 und 3 ausgebildeten Mittenband 2 ausgebildet, die sich jeweils über den gesamten Umfang des Fahrzeugluftreifens in Umfangsrichtung U erstrecken.

Das linke Schulterband 3 ist aus einer Profilblockreihe 11 und einer axial daneben angeordneten Profilblockreihe 10 ausgebildet. Das Mittenband 2 ist aus einer Profilblockreihe 8 und einer axial daneben angeordneten Profilblockreihe 9 ausgebildet. Das rechte Schulterband 3 ist aus einer Profilblockreihe 6 und einer axial daneben angeordneten Profilblockreihe 7 ausgebildet. Die Profilblockreihen 6, 7, 8, 9, 10 und 11 erstrecken sich jeweils in Umfangsrichtung U des Fahrzeugluftreifens über den gesamten Umfang des Fahrzeugluftreifens. Die Profilblockreihe 11 ist aus einer Vielzahl von in Umfangsrichtung U hintereinander angeordneten und jeweils durch eine Querrille 31 voneinander beabstandeten Profilblockelementen 21 ausgebildet. Die Profilblockreihe 10 ist aus einer Vielzahl von in Umfangsrichtung U hintereinander angeordneten und jeweils durch eine Querrille 30 voneinander beabstandeten Profilblockelementen 20 ausgebildet. Die Profilblockreihe 8 ist aus einer Vielzahl von in Umfangsrichtung U hintereinander angeordneten und jeweils durch eine Querrille 28 voneinander beabstandeten Profilblockelementen 18 ausgebildet. Die Profilblockreihe 9 ist aus einer Vielzahl von in Umfangsrichtung U hintereinander angeordneten und jeweils durch eine Querrille 29 voneinander beabstandeten Profilblockelemente 19 ausgebildet. Die Profilblockreihe 6 ist aus einer Vielzahl von in Umfangsrichtung U hintereinander angeordneten und jeweils durch eine Querrille 26 voneinander beabstandeten Profilblockelementen 16 ausgebildet. Die Profilblockreihe 7 ist aus einer Vielzahl von in Umfangsrichtung U hintereinander angeordneten und jeweils durch eine Querrille 27 voneinander beabstandeten Profilblockelementen 17 ausgebildet.

Die Profilblockreihe 11 und die Profilblockreihe 10 sind in axialer Richtung A durch eine über den Umfang des Fahrzeugluftreifens erstreckte mit ihrem Haupterstreckungsverlauf in Umfangsrichtung U ausgerichtete Umfangsrille 13 voneinander beabstandet ausgebildet. Die Profilblockreihe 10 und die Profilblockreihe 8 sind in axialer Richtung A durch eine über den gesamten Umfang des Fahrzeugluftreifens erstreckte und in ihrer Haupterstreckungsrichtung in Umfangsrichtung U ausgerichtete Umfangsrille 5 voneinander beabstandet ausgebildet. Die Profilblockreihe 8 und die Profilblockreihe 9 sind in axialer Richtung A durch eine über den gesamten Umfang des Fahrzeugluftreifens erstreckte und in ihrer Haupterstreckungsrichtung in Umfangsrichtung U ausgerichtete Umfangsrille 15 voneinander beabstandet ausgebildet. Die Profilblockreihe 9 und die Profilblockreihe 6 sind in axialer Richtung A durch eine über den gesamten Umfang des Fahrzeugluftreifens erstreckte und in ihrer Haupterstreckungsrichtung in Umfangsrichtung U ausgerichtete Umfangsrille 4 voneinander beabstandet ausgebildet. Die Profilblockreihe 6 und die Profilblockreihe 7 sind in axialer Richtung A durch eine über den gesamten Umfang des Fahrzeugluftreifens erstreckte und in ihrer Haupterstreckungsrichtung in Umfangsrichtung U ausgerichtete Umfangsrille 12 voneinander beabstandet ausgebildet.

Die axiale Breite T_{A} der Bodenaufstandsfläche des Laufstreifenprofils erstreckt sich von der Profilblockreihe 11 bis zur Profilblockreihe 7.

Des Schulterbandbereich 1 erstreckt sich in axialer Richtung mit einer Erstreckungsbreite B_{S} von der axialen Position der über den Umfang des Fahrzeugluftreifens gemittelten Breite der Umfangsrille 4 im Rillengrund der Umfangsrille 4 bis zum axialen Rand der Bodenaufstandsfläche. Ebenso erstreckt sich der Schulterbandbereich 3 in axialer Richtung mit einer Erstreckungsbreite B_{S} von der axialen Position der über den Umfang des Fahrzeugluftreifens gemittelten Breite der Umfangsrille 5 im Rillengrund der Umfangsrille 5 bis zum axialen Rand der Bodenaufstandsfläche. Die axiale Erstreckungsbreite B_{S} ist jeweils mit 0,2 TA ≤ B_{S} ≤ 0,4 TA bemessen. Beispielsweise ist B_{S} = 0,3 TA gewählt.

Zur Vereinfachung wird im Folgenden der weitere Profilaufbau des Schulterbands 1 und des Schulterbandes 3 nur in Bezug auf den Aufbau des Schulterbandes 1 erläutert. Der Aufbau des Schulterbandes 3 ist in analoger Weise ausgebildet.

Wie in den Figuren 1 und 2 zu erkennen ist, sind die Profilblockreihen 6 und 7 mit ihren Profilblockelementen 16 bzw. 17 in Umfangsrichtung U zueinander versetzt ausgebildet. Die Umfangsrille 12 ist in Umfangsrichtung U erstreckt ausgerichtet und längs ihres Verlaufes in Umfangsrichtung U zickzackförmig ausgebildet. Jede Querrille 26 der Profilblockreihe 6 erstreckt sich in axialer Richtung A ausgehend von der Umfangsrille 4 bis zur Umfangsrille 12 und mündet dort jeweils in einem von der Umfangsrille 4 wegweisenden axial äußeren Knickpunkt der Umfangsrille 12, so dass in jedem axial äußeren Knickpunkt der zickzackförmigen Umfangsrille 12 jeweils genau eine Querrille 26 mündet. Jede Querrille 27 der Profilblockreihe 7 erstreckt sich in axialer Richtung ausgehend von einer Position axial außerhalb der Bodenaufstandsfläche T_{A} bis in den Bereich innerhalb der Bodenaufstandsfläche T_{A} und mündet dort jeweils in einem zur Umfangsrille 4 hinweisenden axial inneren Knickpunkt der zickzackförmigen Umfangsrille 12, so dass in jeden axial inneren Knickpunkt der zickzackförmigen Umfangsrille 12 jeweils genau eine Querrille 27 mündet. Auf diese Weise sind die Querrillen 27 und 26 in Umfangsrichtung U jeweils versetzt zueinander angeordnet.

Wie in Fig. 2 dargestellt ist, überlappen sich die Querrillen 26 und 27 in axialer Richtung A um das Maß der maximalen axialen Erstreckungsbreite S des Rillenverlaufes der Umfangsrille 12. Die Erstreckungsbreite S ist dabei mit (0,15 B_{S}) ≤ S ≤ (0,4 B_{S}) gewählt. Beispielsweise ist S = 0,2 B_{S} gewählt.

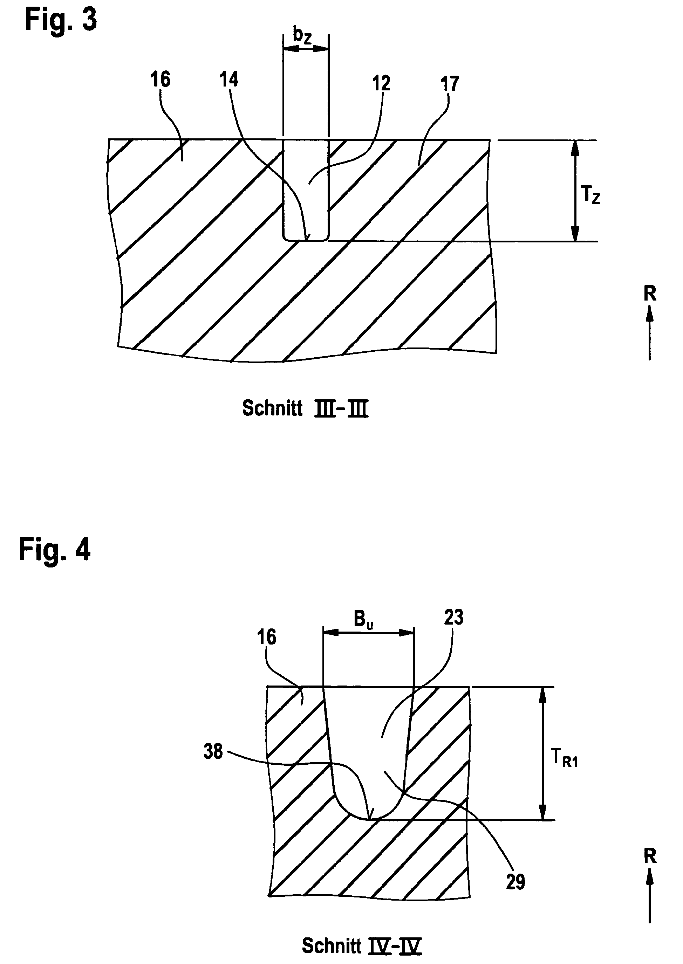

Wie in Fig. 3 zu erkennen ist, ist die Umfangsrille 12 mit einer Rillentiefe T_{Z} wobei T_{Z} in jeder Schnittebene senkrecht zum Erstreckungsverlauf der zickzackförmig verlaufenden Umfangsrille 12 jeweils den radialen Abstand zwischen tiefstem Punkt des die Umfangsrille 12 nach radial innen begrenzenden Rillengrundes 14 und der die Straßenkontaktfläche bildenden radial äußeren Mantelfläche an die durch die Umfangsrille 12 beabstandeten Profilblockelemente 16 und 17 darstellt.

Wie in Fig. 3 zu erkennen ist, ist die Umfangsrille 12 mit einer Breite b_{z} ausgebildet, wobei die Breite b längs der Erstreckung der Umfangsrille 12 jeweils der Abstand der beiden die Umfangsrille 12 in axialer Richtung A begrenzenden Rillenwände darstellt, welcher in allen Schnittebenen senkrecht zum Erstreckungsverlauf der zickzackförmig verlaufenden Umfangsrille 12 jeweils in der die Straßenkontaktfläche bildenden radial äußeren Mantelfläche an die durch die Umfangsrille 12 beabstandeten Profilblockelemente 16 und 17 in der Umfangsrille 12 gemessen wird. Die Breite b_{z} der Umfangsrille 12 ist dabei deutlich kleiner gewählt als die entsprechende Breite der Umfangsrille 4. So ist die Breite der Umfangsrille 12 beispielsweise mit einem Drittel der Breite der Umfangsrille 4 gewählt.

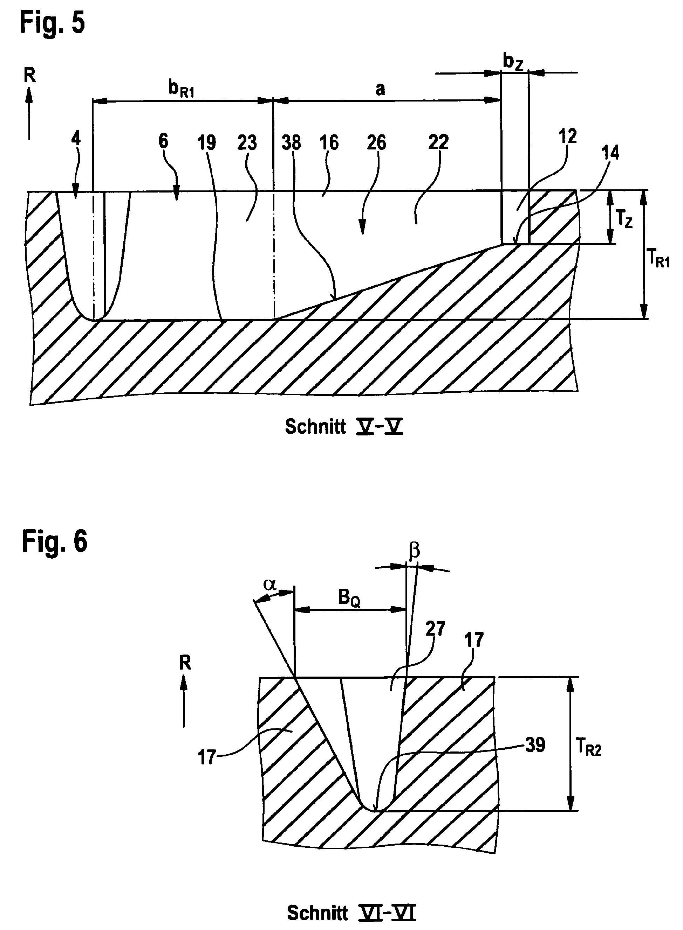

Wie den Figuren 2, 4 und 5 entnommen werden kann, erstrecken sich die Querrillen 26 jeweils ausgehend von der Umfangsrille 12 über einen ersten axialen Erstreckungsbereich 22 der axialen Erstreckungslänge a und einen anschließenden zweiten axialen Erstreckungsbereich 23 der axialen Erstreckungslänge b_{R1}, der bis zur Einmündung in die Umfangsrille 4 reicht. Im zweiten Erstreckungsbereich 23 ist die Querrille 26 mit ihrem die Querrille 26 nach radial innen begrenzenden Rillengrund 38 geradlinig mit über die Erstreckungslänge b_{R1} konstanter Rillentiefe T_{R1} ausgebildet, die der Rillentiefe der Umfangsrille 4 entspricht. Im ersten Erstreckungsbereich 22 der axialen Erstreckungslänge a ist der Rillengrund 38 ausgehend von dem im zweiten Erstreckungsbereich 23 mit konstanter Rillentiefe T_{R1} verlaufenden Rillengrund 38 rampenförmig bis zum Rillengrund 14 der Umfangsrille 12 hin ansteigend ausgebildet. Somit nimmt die Rillentiefe der Querrille 26 im ersten Erstreckungsbereich 22 ausgehend von der Rillentiefe T_{z} in der Einmündungsstelle in die Umfangsrille 12 in Richtung zur Umfangsrille 4 hin über den gesamten ersten Erstreckungsabschnitt 22 hinweg kontinuierlich bis zu dem Maximalwert T_{R1} zu. Mit Erreichen dieser Rillentiefe T_{R1} beginnt der zweite Erstreckungsbereich 23.

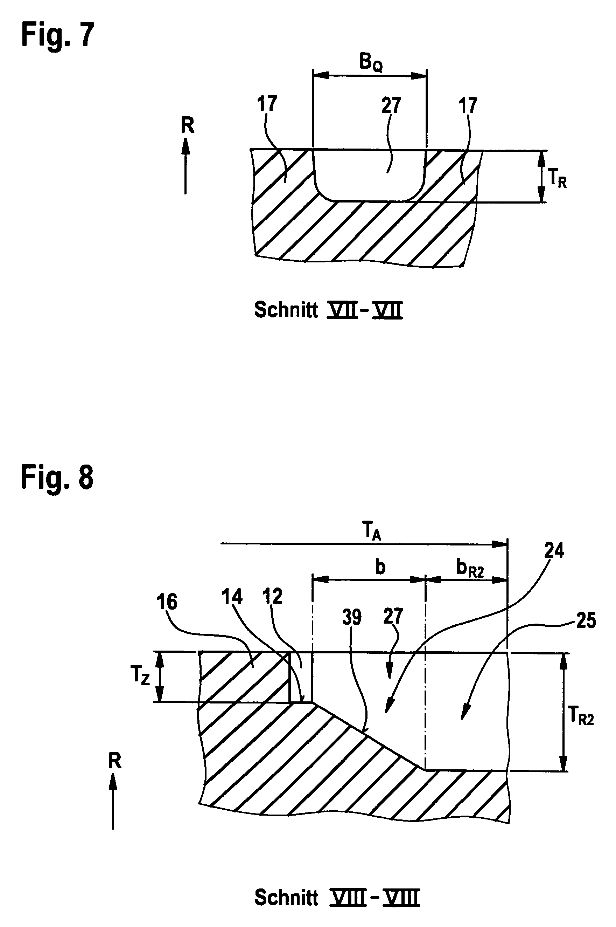

Wie in den Figuren 2, 6, 7 und 8 dargestellt ist, sind die Querrillen 27 jeweils ausgehend von ihrer Einmündungsstelle in die Umfangsrille 12 mit einem ersten Erstreckungsabschnitt 24 der in axialer Richtung gemessenen Erstreckungslänge b ausgebildet, in dem der die Querrille 27 jeweils nach radial innen begrenzende Rillengrund 39 rampenförmig kontinuierlich abfällt und in dem die Rillentiefe der Querrille 27 ausgehend von der Rillentiefe T_{z} in der Einmündungsstelle in die Umfangsrille 12 zu der von der Umfangsrille 12 wegweisenden Seite hin kontinuierlich bis zu einer Rillentiefe T_{R2} zunimmt. Mit Erreichen der Rillentiefe T_{R2} schließt sich ein zweiter Erstreckungsbereich 25 der in axialer Richtung gemessenen Erstreckungslänge b_{R2} an, der sich bis zur axial äußeren Grenze der Breite T_{A} der Bodensaufstandsfläche erstreckt. Im zweiten Erstreckungsbereich 25 ist die Querrille 27 mit einem die Querrille 27 nach radial innen begrenzenden Rillengrund 39 ausgebildet, der geradlinig mit konstanten Rillentiefe T_{R2} verläuft. Wie in den Figuren 2 und 7 dargestellt ist, nimmt die Rillentiefe außerhalb der axialen Erstreckung der Bodenaufstandsfläche wiederum ab.

Für die Rillentiefen T_{R1} und T_{Z} am Neureifen gilt (0,3 T_{R1} ≤ T_{Z} ≤ 0,6 T_{R1}). Für die Rillentiefen T_{R2} und T_{Z} am Neureifen gilt: (0,3 T_{R2} ≤ T_{Z} ≤ 0,6 T_{R2}). Im dargestellten Ausführungsbeispiel ist T_{R1} = T_{R2} gewählt mit T_{R1} = 9,5 mm und mit T_{Z} = 4mm und somit mit T_{Z} = (0,42T_{R1}).

Die axiale Erstreckungslänge a des ersten Erstreckungsbereichs 22 der Querrille 26 und die axiale Erstreckungslänge b des ersten Erstreckungsbereichs 24 der Querrille 27 sind so gewählt, dass a ≥ b. In einer besonderen Ausführung sind a und b so gewählt, dass (1,3b ≤ a ≤ 2b). Im dargestellten Ausführungsbeispiel ist a = 1,6 b gewählt.

In dem in Fig. 2 dargestellten Ausführungsbeispiel ist b_{R1} = b_{R2} = 0,3B_{S} gewählt.

Wie in den Figuren 1 und 2 dargestellt ist, sind in den Profilblockelementen 16, 17, 18, 19, 20 und 21 jeweils mehrere in Umfangsrichtung U hintereinander angeordnete Feineinschnitte 32, 33, 34, 35, 36 bzw. 37 ausgebildet, die sich in axialer Richtung A des Fahrzeugluftreifens jeweils durch das gesamte Profilblockelement 16, 17, 18, 19, 20 bzw. 21 innerhalb der Bodenaufstandsbreite T_{A} hindurch erstrecken.

### Bezugszeichenliste

### (Teil der Beschreibung)

- 1: Schulterband
- 2: Mittenband
- 3: Schulterband
- 4: Umfangsrille
- 5: Umfangsrille
- 6: Profilblockreihe
- 7: Profilblockreihe
- 8: Profilblockreihe
- 9: Profilblockreihe
- 10: Profilblockreihe
- 11: Profilblockreihe
- 12: Umfangsrille
- 13: Umfangsrille
- 14: Rillengrund
- 15: Umfangsrille
- 16: Profilblockelement
- 17: Profilblockelement
- 18: Profilblockelement
- 19: Profilblockelement
- 20: Profilblockelement
- 21: Profilblockelement
- 22: Erster Erstreckungsbereich
- 23: Zweiter Erstreckungsbereich
- 24: Erster Erstreckungsbereich
- 25: Zweiter Erstreckungsbereich
- 26: Querrille
- 27: Querrille
- 28: Querrille
- 29: Querrille
- 30: Querrille
- 31: Querrille
- 32: Feineinschnitt
- 33: Feineinschnitt
- 34: Feineinschnitt
- 35: Feineinschnitt
- 36: Feineinschnitt
- 37: Feineinschnitt
- 38: Rillengrund
- 39: Rillengrund

## Patentansprüche

1. Laufstreifenprofil eines Fahrzeugluftreifens - insbesondere eines Van- oder Kleintransporterreifens - mit zwei in axialer Richtung A des Fahrzeugluftreifens ausgebildeten äußeren Schulterbandbereichen (1,3) und einem axial dazwischen angeordneten Mittenbandbereich (2), die jeweils in axialer Richtung A durch eine über den Umfangs des Fahrzeugluftreifens erstreckte in Umfangsrichtung U ausgerichtete erste Umfangsrille (4,5) von einander beabstandet sind, wobei die Profilbänder (1,2,3) jeweils Profilblockreihen (6,7,8,9,10,11) aufweisen, die aus in Umfangsrichtung U des Fahrzeugluftreifens hintereinander angeordneten und durch Querrillen (26,27,28,29,30,31) von einander beabstandeten radial erhabenen Profilblockelementen (16,17,18,19,20,21) ausgebildet sind, wobei die Querrillen (26,27,28,29,30,31) und die Umfangsrillen (4,5) jeweils nach radial innen durch einen in Haupterstreckungsrichtung der jeweiligen Umfangs- bzw. Querrille erstreckten Rillengrund begrenzt ausgebildet sind,
wobei wenigstens einer der beiden - insbesondere beide - Schulterbandbereiche (1) ausgehend von der ersten Umfangsrille (4) aus einer ersten, von der ersten Umfangsrille (4) axial begrenzten Profilblockreihe (6) und aus einer zweiten axial neben der ersten Profilblockreihe (6) angeordneten, in Umfangsrichtung U zur erstem versetzten und in axialer Richtung A durch eine zweite Umfangsrille (12) von der ersten beabstandeten Profilblockreihe (7) ausgebildet ist, die sich axial bis in eine Position außerhalb der Bodenaufstandsbreite T_{A} erstreckt,
wobei die zweite Umfangsrille (12) längs ihrer Erstreckung in Umfangsrichtung U mit einem zickzack-förmigen Verlauf mit in Umfangsrichtung U alternierend angeordneten axial äußeren von der ersten Umfangsrille (4) weg weisenden und axial inneren zur ersten Umfangsrille (4) hin weisenden Knickstellen ausgebildet ist,
bei der in jeder axial äußeren Knickstelle eine Querrille (26) der ersten Profilblockreihe (6) mündet, die sich in axialer Richtung A von der ersten (4) zur zweiten Umfangsrille (12) erstreckt, und bei der in jeder axial inneren Knickstelle eine Querrille (27) der zweiten Profilblockreihe (7) mündet, die sich in axialer Richtung A von der zweiten Umfangsrille (12) bis in eine Position außerhalb der Bodenaufstandsbreite T_{A} erstreckt,
wobei die zweite Umfangsrille (12) mit einer Rillentiefe T_{Z} ausgebildet ist, **dadurch gekennzeichnete, dass** die Querrillen (26) der ersten Profilblockreihe (6) längs ihrer axialen Erstreckung ausgehend von der Rillentiefe T_{Z} in der Einmündung in die zweite Umfangsrille (12) jeweils in einem ersten Erstreckungsbereich (22) mit bis zu einem Maximalwert T_{R1} kontinuierlich zunehmender Rillentiefe und in einem sich dem ersten Erstreckungsbereich (22) anschließenden zweiten Erstreckungsbereich (23), der sich bis zur Einmündung in die erste Umfangsrille (4) erstreckt, mit der Konstanten Rillentiefe T_{R1} ausgebildet ist, und wobei die Querrillen (27) der zweiten Profilblockreihe (7) längs ihrer axialen Erstreckung ausgehend von der Rillentiefe T_{z} in der Einmündung in die zweite Umfangsrille (12) jeweils in einem ersten Erstreckungsbereich (24) mit bis zu einem Maximalwert T_{R2} kontinuierlich zunehmender Rillentiefe und in einem anschließenden zweiten Erstreckungsbereich (25) innerhalb der Bodenaufstandsbreite T_{A} mit der konstenten Rillentiefe T_{R2} ausgebildet ist.

2. Laufstreifenprofil gemäß den Merkmalen von Anspruch 1,
wobei die zweite Umfangsrille (12) schmaler ausgebildet ist als die erste Umfangsrille (4).

3. Laufstreifenprofil gemäß den Merkmalen von Anspruch 1 oder 2,
mit einer axialen Erstreckungsbreite Bₛ des Schulterbandbereichs (1) im Erstreckungsbereich der Bodenaufstandsbreite T_{A} gemessen ausgehend von der ersten Umfangsrille (4) und mit einer in axialer Richtung A des Fahrzeugluftreifens gemessenen maximalen axialen Erstreckungsbreite s des Rillenverlaufs der zweiten Umfangsrille (12) mit (0,15B_{S} )≤ s ≤ (0,4B_{S}).

4. Laufstreifenprofil gemäß den Merkmalen von einem oder mehreren der vorangegangenen Ansprüche,
wobei der zweite Erstreckungsbereich (23) der Querrillen (26) der ersten Profilblockreihe (6) eine in axialer Richtung A des Fahrzeugluftreifens gemessene Erstreckungsbreite b_{R1} aufweist mit (0,15B_{S} )≤ b_{R1} ≤ (0,4B_{S}), insbesondere mit b_{R1} = (0,4B_{S}).

5. Laufstreifenprofil gemäß den Merkmalen von einem oder mehreren der vorangegangenen Ansprüche,
wobei der zweite Erstreckungsbereich (25) der Querrillen (27) der zweiten Profilblockreihe (7) eine in axialer Richtung A des Fahrzeugluftreifens gemessene Erstreckungsbreite b_{R2} aufweist mit (0,15B_{S} )≤ b_{R2} ≤ (0,4B_{S}).

6. Laufstreifenprofil gemäß den Merkmalen von einem oder mehreren der vorangegangenen Ansprüche,
wobei die Rillentiefen T_{R1} und T_{Z} am Neureifen mit (0,3 T_{R1} )≤ T_{Z} ≤ (0,6 T_{R1}) ausgebildet sind.

7. Laufstreifenprofil gemäß den Merkmalen von einem oder mehreren der vorangegangenen Ansprüche,
wobei die Rillentiefen T_{R2} und T_{z} am Neureifen mit (0,3 T_{R2} )≤ T_{z} ≤ (0,6 T_{R2}) ausgebildet sind.

8. Laufstreifenprofil gemäß den Merkmalen von einem oder mehreren der vorangegangenen Ansprüche,
wobei die Rillentiefen T_{R1} und T_{R2} mit T_{R1} = T_{R2} ausgebildet sind.

9. Laufstreifenprofil gemäß den Merkmalen von einem oder mehreren der vorangegangenen Ansprüche,
wobei der erste Erstreckungsbereich (22) der Querrillen (26) der ersten Profilblockreihe (6) eine in axialer Richtung A des Fahrzeugluftreifens gemessene Erstreckungsbreite a und der erste Erstreckungsbereich (24) der Querrillen (27) der zweiten Profilblockreihe (7) eine in axialer Richtung A des Fahrzeugluftreifens gemessene Erstreckungsbreite b aufweist mit a ≥ b, wobei insbesondere (1,3b) ≤ a ≤ (2b).

## Claims

1. Tread profile of a pneumatic vehicle tyre - in particular of a tyre for a van or small transporter
- with two outer shoulder strip regions (1, 3), formed in the axial direction A of the pneumatic vehicle tyre, and a central strip region (2) arranged axially in between, which regions are spaced apart from each other in the axial direction A by a first circumferential groove (4, 5) made to extend over the circumference of the pneumatic vehicle tyre and aligned in the circumferential direction U, the profile strips (1, 2, 3) respectively having rows of profile blocks (6, 7, 8, 9, 10, 11), which are formed by radially raised profile block elements (16, 17, 18, 19, 20, 21), which are arranged one behind the other in the circumferential direction U of the pneumatic vehicle tyre and are spaced apart from one another by transverse grooves (26, 27, 28, 29, 30, 31), the transverse grooves (26, 27, 28, 29, 30, 31) and the circumferential grooves (4, 5) being respectively formed such that they are delimited radially inwards by a groove base made to extend in the principal direction of extent of the respective circumferential or transverse groove,
wherein at least one of the two - in particular both - shoulder strip regions (1) is/are formed, starting from the first circumferential groove (4), by a first row of profile blocks (6), axially delimited by the first circumferential groove (4), and by a second row of profile blocks (7), which is arranged axially next to the first row of profile blocks (6), is offset in relation to the first row in the circumferential direction U, is spaced apart from the first row by a second circumferential groove (12) in the axial direction A and is made to extend axially as far as a position outside the ground contact width T_{A},
wherein the second circumferential groove (12) is formed along its extent in the circumferential direction U so as to follow a zigzag-shaped path comprising axially outer points of inflection, pointing away from the first circumferential groove (4), and axially inner points of inflection, pointing towards the first circumferential groove (4), arranged such that they alternate in the circumferential direction (U),
in which circumferential groove there opens out at every axially outer point of inflection a transverse groove (26) of the first row of profile blocks (6), which is made to extend in the axial direction A from the first circumferential groove (4) to the second circumferential groove (12), and in which circumferential groove there opens out at every axially inner point of inflection a transverse groove (27) of the second row of profile blocks (7), which is made to extend in the axial direction A from the second circumferential groove (12) as far as a position outside the ground contact width T_{A},
wherein the second circumferential groove (12) is formed with a groove depth T_{z},
**characterized in that**
the transverse grooves (26) of the first row of profile blocks (6) are formed along their axial extent, starting from the groove depth T_{z} in the opening into the second circumferential groove (12), respectively in a first range of extent (22) with a groove depth increasing continuously up to a maximum value T_{R1} and in a second range of extent (23), which adjoins the first range of extent (22) and is made to extend as far as the opening into the first circumferential groove (4), with the constant groove depth T_{R1}, and wherein the transverse grooves (27) of the second row of profile blocks (7) are formed along their axial extent, starting from the groove depth T_{z} in the opening into the second circumferential groove (12), respectively in a first range of extent (24) with a groove depth increasing continuously up to a maximum value T_{R2} and in an adjoining second range of extent (25) within the ground contact width T_{A} with the constant groove depth T_{R2}.

2. Tread profile according to the features of Claim 1, wherein the second circumferential groove (12) is formed narrower than the first circumferential groove (4).

3. Tread profile according to the features of Claim 1 or 2, with an axial width of extent Bₛ for the shoulder strip region (1), measured in the range of extent of the ground contact width T_{A}, starting from the first circumferential groove (4) and with a maximum axial width of extent s of the groove path, measured in the axial direction A of the pneumatic vehicle tyre, of the second circumferential groove (12) where (0.15B_{S}) ≤ s ≤ (0.4B_{S}).

4. Tread profile according to the features of one or more of the preceding claims,
wherein the second range of extent (23) of the transverse grooves (26) of the first row of profile blocks (6) has a width of extent b_{R1}, measured in the axial direction A of the pneumatic vehicle tyre, where (0.15B_{S}) ≤ b_{R1} ≤ (0.4B_{S}), in particular where b_{R1} = (0.4B_{S}).

5. Tread profile according to the features of one or more of the preceding claims,
wherein the second range of extent (25) of the transverse grooves (27) of the second row of profile blocks (7) has a width of extent b_{R2}, measured in the axial direction A of the pneumatic vehicle tyre, where (0.15B_{S}) ≤ b_{R2} ≤ (0.4B_{S}).

6. Tread profile according to the features of one or more of the preceding claims,
wherein the groove depths T_{R1} and T_{Z} are formed on a new tyre with (0.3 T_{R1}) ≤ T_{Z} ≤ (0.6 T_{R1}).

7. Tread profile according to the features of one or more of the preceding claims,
wherein the groove depths T_{R2} and T_{z} are formed on a new tyre with (0.3 T_{R2}) ≤ T_{Z} ≤ (0.6 T_{R2}).

8. Tread profile according to the features of one or more of the preceding claims,
wherein the tread depths T_{R1} and T_{R2} are formed with T_{R1} = T_{R2}.

9. Tread profile according to the features of one or more of the preceding claims,
wherein the first range of extent (22) of the transverse grooves (26) of the first row of profile blocks (6) has a width of extent a, measured in the axial direction A of the pneumatic vehicle tyre, and the first range of extent (24) of the transverse grooves (27) of the second row of profile blocks (7) has a width of extent b, measured in the axial direction A of the pneumatic vehicle tyre, with a ≥ b, where in particular (1.3b) ≤ a ≤ (2b).

## Revendications

1. Profil de bande de roulement pour bandage pneumatique pour roue de véhicule, en particulier bandage de roue pour camionnette ou petit camion,
présentant deux parties extérieures (1, 3) de bande d'épaulement formées dans la direction axiale A du bandage pneumatique de roue de véhicule entre lesquelles une partie (2) de bande centrale est disposée dans la direction axiale,
les parties de bande d'épaulement étant séparées l'une de l'autre dans la direction axiale A par une première rainure périphérique (4, 5) qui s'étend sur la périphérie du bandage pneumatique pour roue de véhicule et qui est orientée dans la direction périphérique U,
les bandes profilées (1, 2, 3) présentant toutes des rangées (6, 7, 8, 9, 10, 11) de blocs profilés disposées les unes derrière les autres dans la direction périphérique U du bandage pneumatique pour roue de véhicule et des éléments (16, 17, 18, 19, 20, 21) de blocs profilés débordant radialement et séparés les uns des autres par des rainures transversales (26, 27, 28, 29, 30, 31),
les rainures transversales (26, 27, 28, 29, 30, 31) et les rainures périphériques (4, 5) étant toutes délimitées radialement vers l'intérieur par un fond de rainure qui s'étend dans la direction de l'extension principale de la rainure périphérique ou de la rainure transversale concernée,
partant de la première rainure périphérique (4), au moins l'une des deux et en particulier les deux parties (1) de bande d'épaulement sont formées par une première rangée (6) de blocs profilés délimitée axialement par la première rainure périphérique (4) et par une deuxième rangée (7) de blocs profilés disposée axialement à côté de la première rangée (6) de blocs profilés, décalée par rapport à la première dans la direction périphérique U et séparée de la première dans la direction axiale A par une deuxième rainure périphérique (12), la deuxième rangée de blocs profilés s'étendant axialement jusqu'en une position située à l'extérieur de la largeur T_{A} d'appui au sol,
la deuxième rainure périphérique (12) présentant dans son extension dans la direction périphérique U une configuration en zigzag qui présente des emplacements coudés disposés en alternance dans la direction périphérique U de manière à s'éloigner axialement vers l'extérieur par rapport à la première rainure périphérique (4) et à s'approcher axialement vers l'intérieur en direction de la première rainure périphérique (4),
une rainure transversale (26) de la première rangée (6) de blocs profilés, qui s'étend dans la direction axiale A depuis la première rainure périphérique (4) jusqu'à la deuxième rainure périphérique (12) débouchant dans chaque emplacement coudé situé axialement à l'extérieur et une rainure transversale (27) de la deuxième rangée (7) de blocs profilés qui s'étend dans la direction axiale A depuis la première rainure périphérique (12) jusqu'en un emplacement situé à l'extérieur de la largeur T_{A} d'appui au sol débouchant dans chaque emplacement coudé situé axialement à l'intérieur,
la deuxième rainure périphérique (12) présentant une profondeur T_{z},
**caractérisé en ce que**
partant de la profondeur de rainure T_{z} à l'embouchure dans la deuxième rainure périphérique (12), les rainures transversales (26) de la première rangée (6) de blocs profilés sont réalisées, dans leur extension axiale, respectivement dans une première partie (22) de leur extension ayant une profondeur de rainure qui croît de manière continue jusqu'à une valeur maximale T_{R1} et dans une deuxième partie (23) de leur extension, qui se raccorde à la première partie (22) de leur extension et qui s'étend jusqu'à l'embouchure de la première rainure périphérique (4), avec la profondeur de rainure T_{R1} constante, et
**en ce que** partant de la profondeur T_{z} à l'embouchure dans la deuxième rainure périphérique (12), les rainures transversales (27) de la deuxième rangée (7) de blocs profilés sont réalisées, dans leur extension axiale, respectivement dans une première partie (24) de leur extension ayant une profondeur de rainure qui croît de manière continue jusqu'à une valeur maximale T_{R2} et dans une deuxième partie (25) de leur extension, qui se raccorde à l'intérieur de la largeur T_{A} d'appui au sol, avec la profondeur de rainure T_{R2} constante.

2. Profil de bande de roulement selon les caractéristiques de la revendication 1, dont la deuxième rainure périphérique (12) est plus étroite que la première rainure périphérique (4).

3. Profil de bande de roulement selon les caractéristiques des revendications 1 ou 2, dans lequel dans la partie de son extension à l'intérieur de la largeur T_{A} d'appui au sol, partant de la première rainure périphérique (4) et à une largeur d'extension axiale maximale s de la deuxième rainure périphérique (12) dans la direction axiale A du bandage pneumatique pour roue de véhicule, la largeur de l'extension axiale Bₛ de la partie (1) de bande d'épaulement vaut Bₛ avec (0,15 Bₛ) ≤ s ≤ (0,4 Bₛ).

4. Profil de bande de roulement selon les caractéristiques d'une ou plusieurs des revendications précédentes, dans lequel la deuxième partie d'extension (23) des rainures transversales (26) de la première rangée (6) de blocs profilés présente dans la direction axiale A du bandage pneumatique pour roue de véhicule une largeur d'extension b_{R1} qui satisfait la relation (0,15 Bₛ) ≤ b_{R1} ≤ (0,4 Bₛ) et en particulier la relation b_{R1} = (0, 4 Bₛ).

5. Profil de bande de roulement selon les caractéristiques d'une ou plusieurs des revendications précédentes, dans lequel la deuxième partie d'extension (25) des rainures transversales (27) de la deuxième rangée (7) de blocs profilés présente dans la direction axiale A du bandage pneumatique de véhicule une extension b_{R2} qui satisfait la relation (0,15 Bₛ) ≤ b_{R2} ≤ (0,4 Bₛ).

6. Profil de bande de roulement selon les caractéristiques d'une ou plusieurs des revendications précédentes, dans lequel les profondeurs T_{R1} et T_{z} des rainures satisfont la relation (0,3 T_{R1}) ≤ T_{z} ≤ (0,6 T_{R1}) sur un bandage de roue neuf.

7. Profil de bande de roulement selon les caractéristiques d'une ou plusieurs des revendications précédentes, dans lequel les profondeurs T_{R2} et T_{z} des rainures satisfont la relation (0,3 T_{R2}) ≤ T_{z} ≤ (0,6 T_{R2}) sur un bandage de roue neuf.

8. Profil de bande de roulement selon les caractéristiques d'une ou plusieurs des revendications précédentes, dans lequel les profondeurs T_{R1} et T_{R2} des rainures satisfont la relation T_{R1} = T_{R2}.

9. Profil de bande de roulement selon les caractéristiques d'une ou plusieurs des revendications précédentes, dans lequel la première partie (22) de l'extension des rainures transversales (26) de la première rangée (6) de blocs profilés présente une largeur d'extension a mesurée dans la direction axiale A du bandage pneumatique pour roue de véhicule et la première partie d'extension (24) des rainures transversales (27) de la deuxième rangée (7) de blocs profilés présente une largeur d'extension b mesurée dans la direction axiale A du bandage pneumatique pour roue de véhicule avec a ≥ b et en particulier (1,3 b) ≤ a ≤ (2 b).
